# EUROPÄISCHE PATENTANMELDUNG

(11) **EP 2 033 773 A2**
(43) Veröffentlichungstag der Anmeldung: **11.03.2009**
(21) Anmeldenummer: 08104841.5
(22) Anmeldetag: 23.07.2008
(51) Int. Cl.: B32B 15/01, F16B 1/00

(54) **Befestigungselement**

(30) Priorität: 05.09.2007 DE 102007000485
(71) Anmelder: HILTI Aktiengesellschaft, 9494 Schaan (LI)
(72) Erfinder: Felder, Gerald, 6800, Feldkirch (AT); Bier, Carmen, 97922, Lauda-Königshofen (DE)
(74) Vertreter: Wildi, Roland

(57) **Zusammenfassung**

Gegenstand der vorliegenden Erfindung ist ein Befestigungselement, wie ein Bolzen oder Nagel, eine Ankerstange, eine Schraube oder eine Niete, welches eine innenliegende Kernzone (14) aus einem relativ harten, kohlenstoffhaltigen Stahl und eine relativ zur Kernzone (14) aussenliegende Randzone (17) aus einem mit einem ersten Legierungsmetall legierten ersten kohlenstoffarmen austenitischen Stahl aufweist. Zur Verbesserung derartiger Befestigungselemente wird vorgeschlagen, zwischen der Kernzone (14) und der Randzone (17) wenigstens eine erste Zwischenzone (15a) aus einem zweiten kohlenstoffarmen Stahl anzuordnen, der eine geringere Härte aufweist, als der Stahl der Kernzone (14).

## Beschreibung

Die vorliegende Erfindung betrifft ein Befestigungselement der im Oberbegriff von Patentanspruch 1 genannten Art.

Derartige Befestigungselemente, wie z.B. Nägel, Bolzen, Schrauben, Anker und dgl. aus Stahl, insbesondere aus hochfestem Stahl, werden in der Befestigungstechnik zum Befestigen von Gegenständen an harten Aufnahmewerkstoffen, wie Beton, Metall oder Gestein, oder zum Verbinden von Gegenständen miteinander verwendet. Die Befestigungselemente weisen dazu einen Schaft, mit einem ggf. in einer Spitze auslaufenden ersten Ende, und mit einem ggf. am anderen Ende des Schaftes liegenden Kopf auf, welcher gegenüber dem Durchmesser des Schaftes vergrössert ist. Der Eintreib- oder Befestigungsvorgang erfolgt z. B. schlagend, beispielsweise mittels brennkraftbetriebener Setzgeräte, oder drehend, beispielsweise mittels Schraubgeräten oder auf andere geeignete Weise.

Die üblicherweise verwendeten hochfesten Stähle vereinen hohe Zugfestigkeiten mit hohen Streckgrenzen (ab ca. > 800 MPa). Folglich können Befestigungselemente mit geringerem Querschnitt bei gleichzeitig höherer Festigkeit gefertigt werden. Hochfester Stahl hat jedoch geringe Toleranzen bei korrosiver Beaufschlagung. Der Grund hierfür ist eine hohe Sprödbruchanfälligkeit infolge kathodischer Spannungsrisskorrosion (SpRK) beim Ablaufen von chemischen und/oder elektrochemischen Prozessen/Teilprozessen in oberflächennahen Bereichen. Hierbei stellt atomarer Wasserstoff eine wesentliche Komponente dar. Wasserstoffversprödung (wasserstoffinduzierte Rissbildung) tritt vor allem an hochfesten gehärteten Stählen mit Festigkeiten ab ca. > 800 MPa Zugfestigkeit auf. Man unterscheidet ganz generell zwischen primärer Wasserstoffversprödung, welche zum Beispiel bei einem galvanischen Verzinkungsprozess entstehen kann und der so genannten Sekundärversprödung - auch korrosionsinduzierte Wasserstoffversprödung genannt. Kritische Parameter sind dabei sowohl die auf Grund der hohen Härte und z. B. örtlich vorliegenden Gefügeinhomogenitäten vorhandenen Eigenspannungen (Zugspannungen), der Werkstoff mit den Gefügebesonderheiten (martensitisch, bainitisch usw.), als auch von aussen aufgebrachte Zugspannungen, die Umgebungsbedingungen sowie der Faktor Zeit.

Der primären Wasserstoffversprödung wird in der Regel durch eine geeignete Wärmebehandlung, der so genannten Entsprödung, begegnet. Im Anschluss an einen galvanischen Veredelungsprozess werden die Teile durch Tempern bei ca. 200°C während mehrerer Stunden gehalten. Dabei wird ein Teil des in dem Werkstoff gelösten Wasserstoffs wieder ausgetrieben und so der Gehalt an gelöstem Wasserstoff unter die für das Befestigungselement kritische Schwelle gesenkt bzw. fein verteilt.

Die sekundäre (korrosionsinduzierte) Wasserstoffversprödung tritt bei hochfesten Befestigungselementen in der Regel dann ein, wenn das Befestigungselement bereits einen Korrosionsangriff erlitten hat. Typisches Beispiel dafür ist die Spannungsrisskorrosion an z. B. hochfesten galvanisch verzinkten Schrauben und Nägeln in direkt bewitterten Aussenanwendungen. Da diese Art der Spannungsrisskorrosion erst nach einer gewissen "Inkubationszeit" auftreten kann, ist dieses Phänomen bei z. B. Schrauben und Nägeln auch unter der Bezeichnung verzögertes Bruchversagen bekannt geworden. Daher dürfen solche Befestigungselemente nur in trockenen Innenräumen eingesetzt werden und sind für Aussenanwendungen nicht geeignet.

Aus der DE 38 04 824 C2 ist ein z. B. als Bohrschraube ausgebildetes Werkstück grosser Härte bekannt, das eine harte Kernzone aus martensitischem Chromstahl und eine austenitische Randzone aus Chrom, Nickel und Eisen in wechselnder Zusammensetzung und geringerer Härte. Zur Erzeugung dieser Randzone wird ein Werkstück aus Chromstahl mit einem Überzug aus einer im Wesentlichen Nickel und Kobalt enthaltenden Legierung versehen. Durch anschliessende Wärmebehandlung bei mindestens 850° C unter Ausschluss von Sauerstoff wird dann durch Diffusion die austenitische Randzone erzeugt und vorhandener Wasserstoff ausgetrieben. Bei dem erzeugten Werkstück soll eine Wasserstoffversprödung vermieden und eine hohe Korrosionsbeständigkeit erreicht werden. Aussen an der austenitische Randzone kann noch eine metallische Beschichtung vorgesehen sein.

Von Nachteil bei diesem Werkstück ist, dass der rostfreie Chromstahl verhältnismässig teuer ist.

Die Aufgabe der vorliegenden Erfindung liegt darin, die oben genannten Nachteile zu vermeiden und ein Befestigungselement bereitzustellen, das eine hohe Resistenz gegen Wasserstoffversprödung aufweist und dabei kostengünstig herstellbar ist.

Dieses wird durch die in Patentanspruch 1 wiedergegebenen Massnahmen erreicht denen folgende besondere Bedeutung zukommt.

Demnach ist zwischen der Kernzone und der Randzone wenigstens eine erste Zwischenzone aus einem zweiten kohlenstoffarmen Stahl angeordnet, wobei der zweite kohlenstoffarme Stahl eine geringere Härte aufweist als der Stahl der Kernzone. Der Stahl der Kernzone ist dabei vorzugsweise ein martensitischer oder bainitischer Stahl. Durch das Vorsehen dieser Zwischenzone aus einem zweiten kohlenstoffarmen Stahl, der eine andere metallurgische Zusammensetzung aufweist als der kohlenstoffarme Stahl der Randzone, wird ein Befestigungselement erzeugt, das eine hohe Resistenz gegen eine sekundäre Wasserstoffversprödung aufweist und kostengünstig herstellbar ist. Auf eine Verwendung von Chromstahl kann verzichtet werden.

Vorteilhaft ist der zweite kohlenstoffarme Stahl der ersten Zwischenzone ein mit einem zweiten Legierungsmetall legierter austenitischer Stahl. Dieser austenitische Stahl kann dabei auch Anteile des ersten Legierungsmetalles enthalten. Die Konzentration des zweiten Legierungsmetalls in dem austenitischen Stahl der Zwischenzone ist dort jedoch signifikant höher als die Konzentration des ersten Legierungsmetalls. Neben dem Vorteil der hohen Resistenz gegen sekundäre Wasserstoffversprödung durch eine verdoppelte Filterwirkung gegen Wasserstoffeintrag, können durch die unterschiedlich legierten Randzone und Zwischenzone die Eigenschaften des Befestigungselements, wie z. B. der Härteverlauf in Bezug auf die Eigenspannungsverteilung im Befestigungselement, optimal ausgestaltet werden.

Von Vorteil ist es auch, wenn der zweite kohlenstoffarme Stahl der ersten Zwischenzone ein ferritischer Stahl ist. Hierdurch wird die Zähigkeit des Befestigungselements deutlich erhöht und gleichzeitig die Eigenspannungsverteilung im Randbereich (Zwischenzone und Randzone) günstig beeinflusst.

Günstig ist es auch, wenn zwischen der ersten Zwischenzone aus ferritischem Stahl und der Randzone eine zweite Zwischenzone aus einem relativ harten, kohlenstoffhaltigen Stahl angeordnet ist, wodurch eine wenig aufwändige Herstellbarkeit gewährleistet wird. Die zweite Zwischenzone weist dabei z. B. ein martensitisches Gefüge auf.

Vorteilhaft weist die erste Zwischenzone, die aus einem mit einem zweiten Legierungsmetall legierten austenitischen Stahl gebildet ist, eine Dicke senkrecht zur Oberfläche der Kernzone zwischen 0,001 mm und 1,0 mm auf, wodurch einerseits eine ausreichende Barriere gegen Wasserstoffversprödung erzeugt wird und andererseits die Kosten für die Herstellung dieser Zone durch einen relativ kurzen Austenitisierungsprozess gering gehalten werden.

Vorteilhaft weist die erste Zwischenzone, die aus einem ferritischen Stahl gebildet ist, eine Dicke senkrecht zur Oberfläche der Kernzone zwischen 0,01 mm und 0,2 mm auf, wodurch einerseits eine ausreichende Barriere gegen Wasserstoffversprödung erzeugt wird und andererseits die Kosten für die Herstellung dieser Zone durch einen relativ kurzen Entkohlungsprozess gering gehalten werden.

Günstig ist es ferner, wenn die zweite Zwischenzone aus einem relativ harten, kohlenstoffhaltigen Stahl eine Dicke senkrecht zur Oberfläche der ersten Zwischenzone zwischen 0,002 mm und 0,3 mm aufweist, wodurch sich scharfe Zonengrenzen erzeugen lassen.

Von Vorteil ist es, wenn das erste Legierungsmetall des Stahls der Randzone ein Metall aus der Gruppe Ni, Mn, Co, Al, Cr, V und Mo ist, wodurch optimale metallurgische Eigenschaften des austenitischen Stahls der Randzone eingestellt werden können. Das erste Legierungsmetall kann dabei auch selbst bereits eine Legierung oder Gemisch mit einem oder mehreren der genannten Metalle sein.

Vorteilhaft ist es auch, wenn das zweite Legierungsmetall des austenitischen Stahls der ersten Zwischenzone ein Metall aus der Gruppe Ni, Mn, Co, Al, Cr, V und Mo ist, wodurch optimale metallurgische Eigenschaften auch des austenitischen Stahls der ersten Zwischenzone eingestellt werden können. Das zweite Legierungsmetall ist dabei nicht identisch mit dem ersten Legierungsmetall. Das zweite Legierungsmetall kann dabei auch selbst bereits eine Legierung oder Gemisch mit einem oder mehreren der genannten Metalle sein.

Vorteilhaft verändert sich der Anteil des zweiten Legierungsmetalls im Stahl der ersten Zwischenzone von aussen nach innen graduell, insbesondere nimmt der Anteil des zweiten Legierungsmetalls von aussen nach innen graduell ab. Weiter vorteilhaft verändert sich auch der Anteil des ersten Legierungsmetalls im Stahl der Randzone von aussen nach innen graduell, insbesondere nimmt auch dort der Anteil des ersten Legierungsmetalls von aussen nach innen graduell ab. Hierdurch kann ein kontinuierlicher Verlauf der Eigenschaften der Randzone und der Zwischenzone gewährleistet werden.

Günstig ist es ferner, wenn aussen an der Randzone eine Beschichtung mit einer Korrosionsschutzschicht angeordnet ist. Diese Schicht kann z. B. eine Metallschicht aus einem der Metalle Zn, Sn, Co oder Al sein, die z. B. galvanisch auf die Oberfläche der Randzone aufgebracht wird. Durch das Vorsehen einer Korrosionsschutzschicht, die das Befestigungselement vorzugsweise vollkommen einhüllt, wird eine hohe Korrosionsresistenz des erfindungsgemässen Befestigungselements erreicht.

In den Zeichnungen ist die Erfindung in mehreren Ausführungsbeispielen dargestellt.

Es zeigen:
- Fig. 1: eine erstes erfindungsgemässes Befestigungselement,
- Fig. 2: einen Schnitt durch das Befestigungselement gemäss der Markierung II aus Fig. 1.
- Fig. 3: einen Schnitt durch ein weiteres erfindungsgemässes Befestigungselement analog zu Fig. 2.

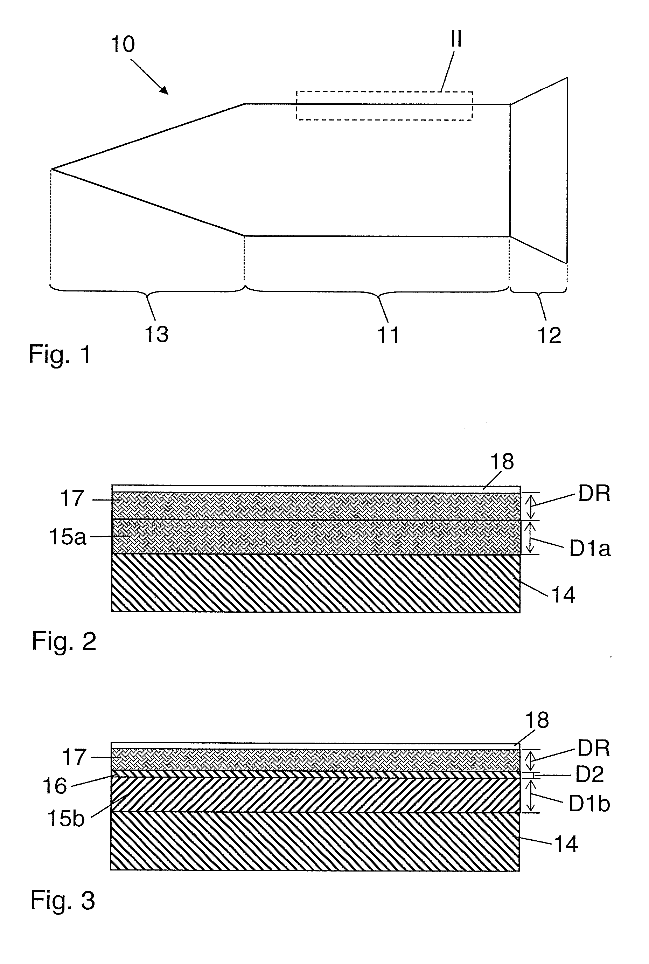

In den Figuren 1 und 2 ist ein als Nagel ausgebildetes Befestigungselement 10 wiedergegeben. Dieses Befestigungselement 10 weist einen Schaft 11 auf, an dessen einem Ende ein Kopf 12 und an dessen anderem Ende eine Spitze 13 ausgebildet ist. Das Befestigungselement 10 weist, wie Fig. 2 zu entnehmen ist, eine Kernzone 14 aus einem kohlenstoffhaltigen Stahl mit einem martensitischen oder bainitischen Gefüge auf, dessen Härte zwischen ca. 30 und 62 HRC liegt. Wenigstens in einem Bereich des Schaftes 11 ist radial aussen an diesem eine Randzone 17 aus einem ersten weniger harten, mit einem ersten Legierungsmetall legierten kohlenstoffarmen Stahl ausgebildet. Diese Randzone 17, die eine Dicke DR senkrecht zur Oberfläche der Kernzone 14 von zwischen 0,001 mm und 1,0 mm hat, weist ein austenitisches Gefüge auf. Das Legierungsmetall ist dabei ein Metall aus der Gruppe Ni, Mn, Co, Al, Cr, V oder Mo. Innerhalb der Randzone 17 nimmt die Konzentration des Legierungsmetalls von innen nach aussen hin zu. Die austenitische Randzone kann dabei z. B. durch das Auftragen einer Legierungsmetall-Beschichtung (z. B. mit einer Schichtdicke von 0,001 - 1,0 mm) auf den Schaft 11 und anschliessender Wärmebehandlung erzeugt werden. Die Randzone 17 weist dabei eine Härte von 80 bis 400 HV auf.

Zwischen der Kernzone 14 und der Randzone 17 ist eine erste Zwischenzone 15a angeordnet, die aus einem zweiten kohlenstoffarmen Stahl geringerer Härte besteht. Die erste Zwischenzone 15a weist dabei eine Härte von 80 bis 400 HV auf.

In dem vorliegenden Beispiel ist dieser kohlenstoffarme Stahl ein austenitischer Stahl, der mit einem zweiten Legierungsmetall legiert ist, das nicht identisch mit dem ersten Legierungsmetall des Stahls der Randzone 17 ist. Das zweite Legierungsmetall ist dabei ein Metall aus der Gruppe Ni, Mn, Co, Al, Cr, V oder Mo. Innerhalb der ersten Zwischenzone 15a nimmt die Konzentration des zweiten Legierungsmetalls von innen nach aussen zu. Die erste Zwischenzone 15a, die eine Dicke D1a senkrecht zur Oberfläche der Kernzone 14 zwischen 0,001 mm und 1,0 mm aufweist, kann durch Beschichtung der Kernzone mit dem zweiten Legierungsmetall und anschliessendem Diffusionsglühen erzeugt werden. Durch Beschichten der ersten Zwischenzone 15a mit dem ersten Legierungsmetall und anschliessendem erneuten Diffusionsglühen kann dann die Randzone 17 erzeugt werden, die sich nach aussen an die erste Zwischenzone 15a anschliesst. Das Befestigungselement 10 ist schliesslich noch, vorzugsweise vollständig, mit einer Korrosionsschutzschicht 18 beschichtet. Diese Korrosionsschutzschicht 18 ist z. B. eine Metallschicht aus einem oder mehreren der Metalle Zn, Sn, Co oder Al, die z. B. galvanisch auf die Oberfläche der Randzone 17 aufgebracht worden ist.

In Fig. 3 ist ein Schnitt durch ein weiteres erfindungsgemässes Befestigungselement dargestellt. Dieses unterscheidet sich dadurch von dem vorhergehend dargestellten Befestigungselement, dass zwischen der Kernzone 14 (mit einer Härte von 30 - 62 HRC) aus dem kohlenstoffhaltigen Stahl mit dem martensitischen oder bainitischen Gefüge und der Randzone 17 aus dem mit dem ersten Legierungsmetall legierten zweiten kohlenstoffarmen Stahl geringerer Härte (Härte von 80 - 400 HV) eine erste Zwischenzone 15b aus einem ferritischen Stahl (mit einer Härte von 50 - 250 HV) und einer sich an diese erste Zwischenzone 15b nach aussen hin anschliessenden zweiten Zwischenzone 16 aus einem kohlenstoffhaltigen Stahl (mit einer Härte von 30 - 62 HRC) mit einem martensitischen oder bainitischen Gefüge angeordnet sind. Die erste Zwischenzone 15b aus dem ferritischen Stahl weist dabei eine Dicke D1b zwischen 0,01 mm und 0,2 mm auf, während die zweite Zwischenzone 16 aus dem martensitischen oder bainitischen kohlenstoffhaltigen Stahl eine Dicke D2 zwischen 0,002 mm und 0,3 mm aufweist.

## Patentansprüche

1. Befestigungselement, welches eine Kernzone (14) aus einem relativ harten, kohlenstoffhaltigen Stahl und eine relativ zur Kernzone (14) aussenliegende Randzone (17) aus einem mit einem ersten Legierungsmetall legierten ersten kohlenstoffarmen austenitischen Stahl aufweist,
**dadurch gekennzeichnet,**
**dass** zwischen der Kernzone (14) und der Randzone (17) wenigstens eine erste Zwischenzone (15a, 15b) aus einem zweiten kohlenstoffarmen Stahl angeordnet ist, der eine geringere Härte aufweist, als der Stahl der Kernzone (14).

2. Befestigungselement, nach Anspruch 1, **dadurch gekennzeichnet, dass** der zweite kohlenstoffarme Stahl der ersten Zwischenzone (15a) ein mit einem zweiten Legierungsmetall legierter austenitischer Stahl ist.

3. Befestigungselement, nach Anspruch 1, **dadurch gekennzeichnet, dass** der zweite kohlenstoffarme Stahl der ersten Zwischenzone (15b) ein ferritischer Stahl ist.

4. Befestigungselement, nach Anspruch 1 oder 3, **dadurch gekennzeichnet, dass** zwischen der ersten Zwischenzone (15b) aus ferritischem Stahl und der Randzone (17) eine zweite Zwischenzone (16) aus einem relativ harten, kohlenstoffhaltigen Stahl angeordnet ist.

5. Befestigungselement, nach Anspruch 1 oder 2, **dadurch gekennzeichnet, dass** die erste Zwischenzone (15a) eine Dicke (D1a) senkrecht zur Oberfläche der Kernzone (14) zwischen 0,001 mm und 1,0 mm aufweist.

6. Befestigungselement, nach einem der Ansprüche 1 und 3 bis 4, **dadurch gekennzeichnet, dass** die erste Zwischenzone (15b) eine Dicke (D1b) senkrecht zur Oberfläche der Kernzone (14) zwischen 0,01 mm und 0,2 mm aufweist.

7. Befestigungselement, nach Anspruch 4, **dadurch gekennzeichnet, dass** die zweite Zwischenzone (16) eine Dicke (D2) senkrecht zur Oberfläche der ersten Zwischenzone (15b) zwischen 0,002 mm und 0,3 mm aufweist.

8. Befestigungselement, nach Anspruch 1, **dadurch gekennzeichnet, dass** das erste Legierungsmetall des Stahls der Randzone (17) ein Metall aus der Gruppe Ni, Mn, Co, Al, Cr, V und Mo ist.

9. Befestigungselement, nach einem der Ansprüche 2 und 5 bis 8, **dadurch gekennzeichnet, dass** das zweite Legierungsmetall des Stahls der ersten Zwischenzone (15a) ein Metall aus der Gruppe Ni, Mn, Co, Al, Cr, V und Mo ist.

10. Befestigungselement, nach einem der Ansprüche 2 und 5 bis 9, **dadurch gekennzeichnet, dass** sich der Anteil des zweiten Legierungsmetalls im Stahl der ersten Zwischenzone (15a) von aussen nach innen graduell verändert.

11. Befestigungselement, nach einem der Ansprüche 1 bis 10, **dadurch gekennzeichnet, dass** sich der Anteil des ersten Legierungsmetalls im Stahl der Randzone (17) von aussen nach innen graduell verändert.

12. Befestigungselement, nach Anspruch 1, **gekennzeichnet durch** eine Beschichtung mit einer Korrosionsschutzschicht (18).
